# EUROPEAN PATENT APPLICATION

(11) **EP 1 431 749 A1**
(43) Date of publication of application: **23.06.2004**
(21) Application number: 01972616.5
(22) Date of filing: 28.09.2001
(51) Int. Cl.: G01N 21/64, G01N 21/76, G01N 33/566, G01N 33/53

(54) **LUMINESCENCE DETECTING DEVICE AND LUMINESCENCE DETECTING MICROARRAY PLATE**

(71) Applicant: Hitachi, Ltd., Chiyoda-ku, Tokyo 101-8010 (JP)
(72) Inventor: YASUDA, Kenji, Hitachinaka-shi, Ibaraki 312-8504 (JP); TAKAHASHI, Satoshi, Hitachinaka-shi, Ibaraki 312-8504 (JP)
(74) Representative: Strehl Schübel-Hopf & Partner
(86) International application number: PCT/JP2001/008587
(87) International publication number: WO 2003/031952

(57) **Abstract**

A luminescence microarray plate suitable for use in luminescent reaction, and a luminescence detecting device utilizing the microarray plate. A partition wall is provided around each microarray minute reaction region to prevent the entry of surrounding luminescence. Luminescence from each minute region is detected by a photo conducting guide. The amount of entry of surrounding luminescence can be reduced and improvements in accuracy and sensitivity can be achieved.

## Description

### TECHNICAL FIELD

The present invention relates to a method for luminescence detection of nucleotides or proteins in a biological sample, particularly to a technique suitable for the measurement of genes or proteins in a minute amount of sample.

### BACKGROUND ART

Genes and proteins are being measured at an increasing rate in recent years, and, as a result, there is a strong need to automate and simplify the measuring process. However, sample volume is limited and it is therefore desirable to measure a sample in a small quantity. In such samples, the concentration of a target analyte is often extremely low, and thus a highly sensitive measurement is desired. Luminescence detecting methods such as chemical luminescence or biological luminescence are capable of achieving sensitivities higher than those of fluorescence or absorption methods by one or more orders of magnitude. The conventional luminescence detecting method typically employs a microplate or a photometric absorption cell (JP Patent Publication (Kokai) Nos. 6-225752 A (1994) and 6-102182 A (1994)). In recent years, however, attention is being focused on techniques whereby hundreds to tens of thousands of different kinds of DNA or proteins are immobilized on a slide glass called microarray in the form of spots, in order to capture and detect specific nucleic acids or proteins (see, for example: *Microarray Biochip Technology,* M. Schena, ed. Eaton Publishing, Sunnyvale, U.S.A. (2000)).

A microarray usually has regions for reactions with diameters in the range between 100 to 1000 µm where specific nucleic acids or proteins are immobilized. Spot regions are provided on the slide glass at regular intervals in an area measuring 10 to 30 mm in width and 20 to 50 mm in length. Fluorescence from these spots on the microarray is often employed, but this technique sometimes suffer from insufficient sensitivity because it observes fluorescence emitted from the surface of minute regions only while irradiated. Thus, there is a need for a detection method suitable for the luminescence method, which is superior to the fluorescence method in sensitivity.

However, in the case of luminescence measurement, it is difficult to measure luminescence from minute regions with high positional accuracy, and there is also a high level of interference from stray light from the surroundings. While methods are available whereby the entire microarray plate is measured using a CCD camera or photographic films (see *Molecular methods for virus detection.* D. L. Wiedbrauk and D. H. Farkas, ed., Chapter 7: Detection Methods Using Chemiluminescence. Academic Press, San Diego, U.S.A. (1995)), it is difficult to measure the intensity of luminescence from individual minute regions with high accuracy, if many minute spots of diameters of 1 mm or less are disposed adjacent to one another within a certain small area. Although the influence from the surrounding minute luminescent regions can be reduced by increasing the distance between the minute spots, that would mean a reduced number of minute reaction regions disposed on the microarray, thus a reduced amount of data set from the same slide glass. This would be disadvantageous in light of the purpose of carrying out capturing hybridization reactions in as many minute reaction regions as possible simultaneously. If the luminescent reactions are to be carried out simultaneously in the plural minute regions in an attempt to improve the processing performance, the influence from the adjacent minute luminescent regions must be reduced substantially. However, chemiluminescence has usually a short luminescence lifetime and must be measured in a short time after the addition of a luminescence substrate, and thus the measurement by scanning a huge number of minute regions after the start of luminescence reaction cannot provide a good accuracy due to variety of luminescence intensity.

In view of these problems of the prior art, the present invention has been achieved in the course of developing a method of detecting luminescence from within multiplicity of minute regions of diameters in the range between 20 and 500 µm simultaneously and with high sensitivity and accuracy. It is an object of the invention to provide a technique suitable for microarrays, in particular, for carrying out measurements immediately after the start of luminescent reaction while reducing the influence of surrounding interfering luminescence. It is another object of the invention to provide a technique suitable for detecting minute reaction regions with diameters that are 1/10 or less of those of the wells on a microplate, which are on the order of several millimeters, using the chemical luminescence method, for example.

### SUMMARY OF THE INVENTION

In accordance with the invention, luminescence reaction is carried out in minute wells provided in a microarray plate and luminescence is transmitted with by a photoconducting guide. The distance between a photo-receiving end of the photoconducting guide and the reaction surface is minimized in order to reduce the loss in the photons of luminescence detected and the photoconducting guide is employed to reduce the entry of luminescence from the other, surrounding minute wells. A thin photoconducting guide (utilizing optical fiber) adapted for the minute wells is used, and the distance between the guide tip surface and the reaction surface in the minute well is reduced. In this way, the luminescence loss can be reduced and detection can be performed with a minute amount of reagent.

In another embodiment, a flat microarray plate substrate is used, to which an opaque sheet provided with through holes in a predetermined arrangement is bonded. The through holes in the sheet combined with the bottom plate are used as minute wells such that partition walls can be provided between the minute reaction regions thus reducing interfering light. By making the diameter of the through holes close to that of the photoconducting guide, the influence of interfering light from the surroundings can be further reduced. By varying the shape or size of the through holes, or by using through holes of different sizes including height in combination, multiple kinds of measurement can be conducted as necessary.

The method of manufacture of the microarray plate having the minute wells includes, but is not limited to, the processing of a microscope slide glass. The partition walls between the minute reaction regions (minute wells) prevent the diffusion of a chemiluminescence reaction solution and functions to reduce the entry of interfering luminescence by blocking the luminescence between the minute reaction regions. For measuring the luminescence in such limited minute spaces individually, a photoconducting guide using an optical fiber cable is suitable.

Luminescence reaction includes a method whereby a chemical luminescent substance is labeled, a method whereby a luminescent reaction product is produced by enzymatic reaction, and a method whereby biological luminescence is produced by enzymatic reaction. The present invention may be applied to any of these methods. In the case of luminescence based on enzymatic reaction, reaction products diffuse into a reaction mixture covering the entire microarray, so that the luminescent region cannot be fixed or identified in the case of the conventional, flat microarray. With the partition walls separating minute wells, the diffusion can be prevented and the location of each spot can be easily identified.

The shape of the minute well may simply be, but is not limited to, circular. The minute reaction regions may be defined by diffusing a great amount of magnetic particles measuring several micrometers or less into the minute well and immobilizing a reactive nucleic acid or protein on the surface of the particles. The edge of the well opening should preferably be provided with a sharp angle and a smooth surface so as to prevent the scattering of luminescence outside the well.

By using a luminescent substance with a long luminescent lifetime and a luminescent substance with a short luminescent lifetime as markers for different objects, in light of the chronological decay of luminescence, and by measuring a plurality of luminescence images at certain time intervals, different target nucleotides or protein molecules can be easily distinguished. Examples of chemical luminescence marker substance that can be used for luminescent reaction include luminol, acridinium ester, and enzymes such as horseradish peroxidase or alkaline phosphatase. As a method of further increasing sensitivity, a biological luminescent method may be used in which firefly luciferase is used as a marker, for example.

The invention provides a luminescence detecting device for detecting a luminescence reaction substance captured in a plurality of minute wells arranged in a microarray plate at predetermined intervals, said device comprising:
holding means for holding said microarray plate;
a luminescence detecting unit including a plurality of photoconducting guides whose tips can be inserted into said minute wells formed in said microarray plate with the same intervals as those of said minute wells, and substrate solution injecting means assembled together with said photoconducting guides for introducing a luminescence reaction substrate solution into individual minute wells, said luminescence detecting unit being disposed above said holding means and capable of moving up or down relative to said holding means;
drive means for driving said luminescence detecting unit up or down relative to said holding means;
means for stopping the downward movement of said luminescence detecting unit driven by said drive means when the tips of said photoconducting guides are at a predetermined position where said tips are inserted into said minute wells of said microarray plate but do not come into contact with the bottom surface of said minute wells; and
photodetecting means capable of detecting the luminescence from individual minute wells by said luminescence detecting unit.

The interval between the centers of adjacent photoconducting guides is in the range approximately between 40 and 2000 µm.

The above device comprises control means whereby, after the tips of said photoconducting guides are inserted into the minute wells in said microarray plate and stopped at said predetermined position where they are not in contact with the bottom surface of said minute wells, a luminescence substrate solution is added to said minute wells using said substrate solution injecting means and the intensity of luminescence is measured.

The invention provides a microarray plate for luminescence detection, comprising:
a substrate having a flat surface; and
an opaque sheet having a plurality of through holes arranged at predetermined intervals, said opaque sheet being bonded to the flat surface of said substrate, wherein a reactive substance immobilized region is provided on the substrate surface exposed at the bottom of said through holes in said opaque sheet.

The opaque sheet preferably has a water-repelling property. The through holes have a diameter in the range of between 10 and 1000 µm.

The invention further provides a method of detecting a target biological polymer comprising the steps of:
sedimenting a group of particles onto a plurality of minute wells formed in a microarray plate at predetermined intervals, said particles having a reactive substance for capturing a target biological polymer immobilized thereon;
dispensing a sample solution into said minute wells;
holding said microarray plate in which said sample has been dispensed for a predetermined time at a predetermined temperature;
adding a luminescence marker probe nucleic acid chain binding to said target biological polymer into said minute wells; and
adding a luminescent reaction substrate solution into said minute wells and detecting luminescence.

The target biological polymer is a nucleic acid having a specific base sequence or a specific protein. The specific protein may be an antibody, an antigen, a receptor, or a lectin, for example.

In accordance with the invention, the amount of luminescence can be measured from minute reaction regions in the microarray plate individually with high accuracy and sensitivity.

### BRIEF DESCRIPTION OF THE DRAWINGS

Fig. 1 shows an example of a luminescence detecting microarray plate used in the invention, with (a) showing a perspective view and Fig. 1 (b) showing a cross-section taken along A-A of (a).
Fig. 2 shows another example of the luminescence detecting microarray plate used in the invention, with (a) showing a perspective view and Fig. 1(b) showing a cross-section taken along A-A of (a).
Fig. 3 shows an example of a luminescence detecting device according to the invention.
Fig. 4 schematically shows a luminescence detecting unit as it approaches the microarray plate and detects luminescence from luminescent regions.
Fig. 5 shows a transverse cross-section of a luminescence detecting unit in which a photoconducting guide and a substrate injecting capillary are disposed in an integral manner, with the luminescence detecting unit being inserted into a minute well.
Fig. 6 shows a cross-sectional elevation of Fig. 5.
Fig. 7 schematically shows the relationship among a marker probe, a sample nucleic acid chain and a capturing probe.
Fig. 8 illustrates another experiment using the microarray plate and luminescence measuring device according to the invention.

### BEST MODE OF CARRYING OUT THE INVENTION

The invention will be described by referring to the attached drawings.

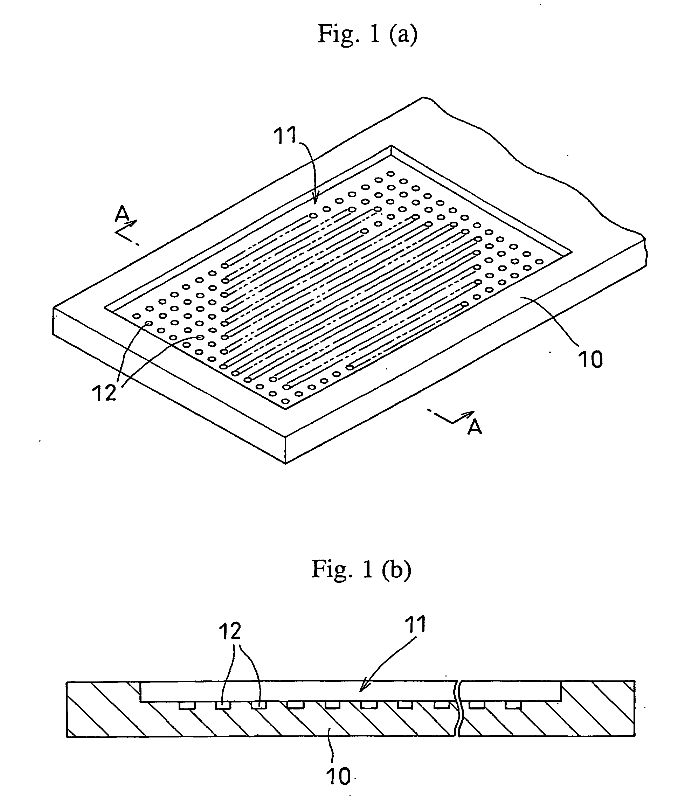

Fig. 1 shows an example of a luminescence detecting microarray plate for detecting luminescence used in the invention. Fig. 1(a) is a perspective view and Fig. 1(b) is a cross section taken along line A-A of Fig. 1(a).

A microarray plate 10 shown in Fig. 1 includes a shallow and rectangular concave portion (sample introducing region) 11 formed on a part of the surface of a glass plate such as a slide glass. In the bottom of the rectangular concave portion are formed a plurality of circular depressions (minute wells) 12 arranged in an array. Each multiple minute well 12 have flat bottom portions, of which a portion constitutes a reaction molecule immobilized region where nucleic acid probes that will hybridize with a target nucleotides in a sample is immobilized. The sample introducing region 11 is provided for simultaneously dispensing one type of sample containing multiple components into all of the minute wells 12 assembled in this region. If a certain amount of the sample can be dispensed into the individual minute well 12, the sample introducing region 11 is not necessary.

The size of the sample introducing region or the minute well is not particularly limited. For example, the sample introducing region may be 15 mm in length, 15 mm in width and 0.2 mm in depth. The minute well provided with the reacting molecule immobilized region at the bottom for immobilizing nucleic acid probe may be circular in shape and about 150 µm in diameter and about 100 µm in depth. The distance between the centers of the circular minute wells may be 300 µm.

The microarray plate 10 may be made of plastic or silicon, as well as glass. It does not have to be transparent; rather, it should preferably be given a color that absorbs light, such as black. In so doing, the reflection of light can be reduced and interference among luminescence in adjacent reacting molecule immobilized regions can be prevented. The minute wells 12 may be formed by drilling, cutting or chemical etching, or with a mold.

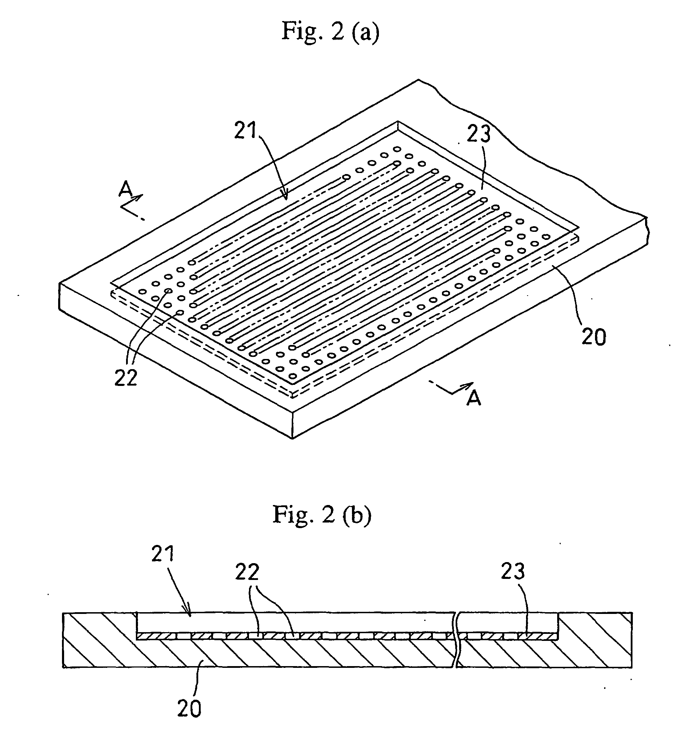

Fig. 2 shows another example of the luminescence detecting microarray plate used in the invention. Fig. 2(a) is a perspective view and Fig. 2(b) is a cross section taken along line A-A of Fig. 2(a).

A microarray plate 20 has a structure similar to that shown in Fig. 1 and includes a slide glass 13 made of glass or plastic in which a rectangular sunken portion (sample introducing region) 21 is formed. An opaque sheet 23 in which through-holes are arranged in an array is glued to the slide glass 13. Specifically, a rectangular concave portion measuring 15 mm in length, 15 mm in width and about 0.5 mm in depth is formed in a slide glass with an average thickness of about 1 mm. Separately, a black carbon-containing polyethylene sheet 23 measuring 15 mm in length, 15 mm in width and about 250 µm in thickness with multiple through-holes of diameter 350 µm formed in a predetermined arrangement is prepared. An epoxy cement is applied to one side of the polyethylene sheet 23, which is then affixed, starting with one end thereof, to the concave portion of the slide glass. In the thus manufactured microarray plate 20, the through-holes formed in the sheet constitute minute wells 22 in which a minute reaction region is formed at the bottom. The sheet material existing between the minute wells functions as a light-shielding wall and as such prevents the luminescence from adjacent minute wells from turning into interfering light, thus improving the measurement reproducibility.

The sheet should desirably be made of a material that is not subject to the permeation of sample or substrate solution, preferably a water-repellent material. Water-absorbing materials are not appropriate for measurement, as they allow solutions to permeate into the surroundings. For the aforementioned purpose, fluorinated polymer materials such as PTFE (polyterafluoroethylene) are appropriate. The color of the sheet surface may preferably be, but is not limited to, black, which is less likely to produce scattering light.

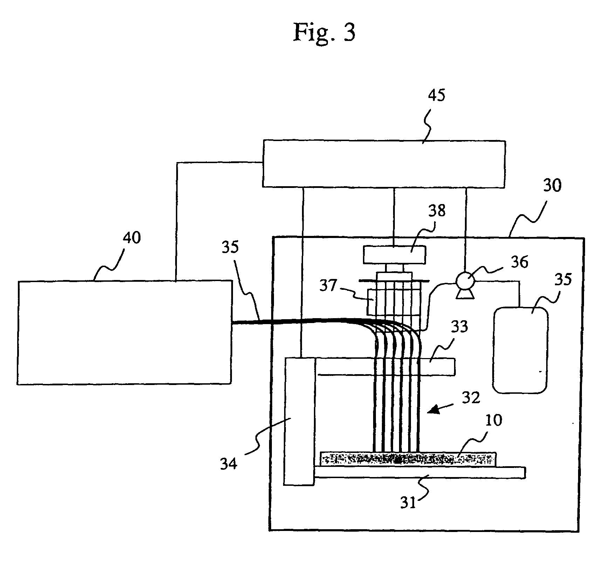

Fig. 3 shows an example of a luminescence detecting device according to the invention, in which the microarray plate 10 shown in Fig. 1 is used.

The luminescence detecting device includes a microarray plate-fixing base 31 for holding the microarray plate 10 on its upper surface, a luminescence detecting unit 32 capable of being moved up or down relative to the fixing base 31, a transporting arm for luminescence detecting unit 33 for moving the luminescence detecting unit 32 up or down, and a support 34 for supporting a transporting arm for the luminescence detecting unit 33. The luminescence detecting device further includes a luminescence substrate solution bottle 35 containing a luminescence substrate solution, a pump 36 for delivering the luminescent substrate solution in the bottle 35 to a microsyringe 37, and a plunger push-down mechanism 38 for injecting the luminescent substrate solution in the microsyringe 37 into each of the minute wells in the microarray plate 10. These elements are contained within a casing 30 with which the external light is blocked. The luminescence detecting unit 32 is connected to a photocounting device 40 via a photoconducting guide bundle 39. The transporting arm for luminescence detecting unit 33, pump 36, plunger push-down mechanism 38 and photocounting device 40 are controlled by a controller 45.

The controller 45 controls the lifting and lowering of the transporting arm for luminescence detecting unit 33 such that each photoconducting guide 41 is lowered close to the surface of a reaction region prior to reaction. The luminescent substrate solution is then added by the operation of the plunger push-down mechanism 38, in order to start a luminescent reaction. The intensity of luminescence is measured by the photocounting device 40. Thereafter, the tip of each photoconducting guide 41 is washed to remove unwanted substance such as substrate components. Then, the photoconducting guide 41 is transported above another minute reaction region on the microarray plate, where luminescent reaction is caused and measured. This cycle of reaction, measurement and washing is repeated until all of the minute reaction regions are reacted and their luminescence intensities are measured. Resultant data is sent to a data processing device.

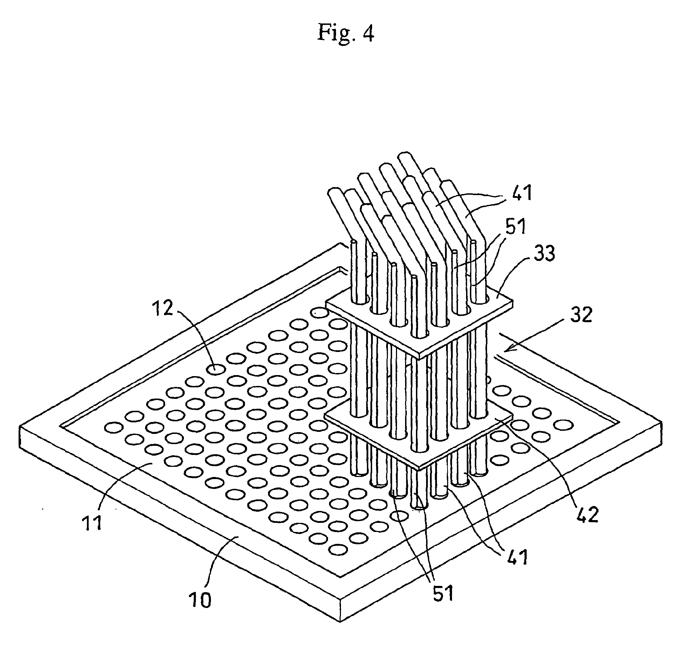

Fig. 4 schematically shows the luminescence detecting unit that is brought near the microarray plate reacting portions for detecting luminescence from the luminescent regions.

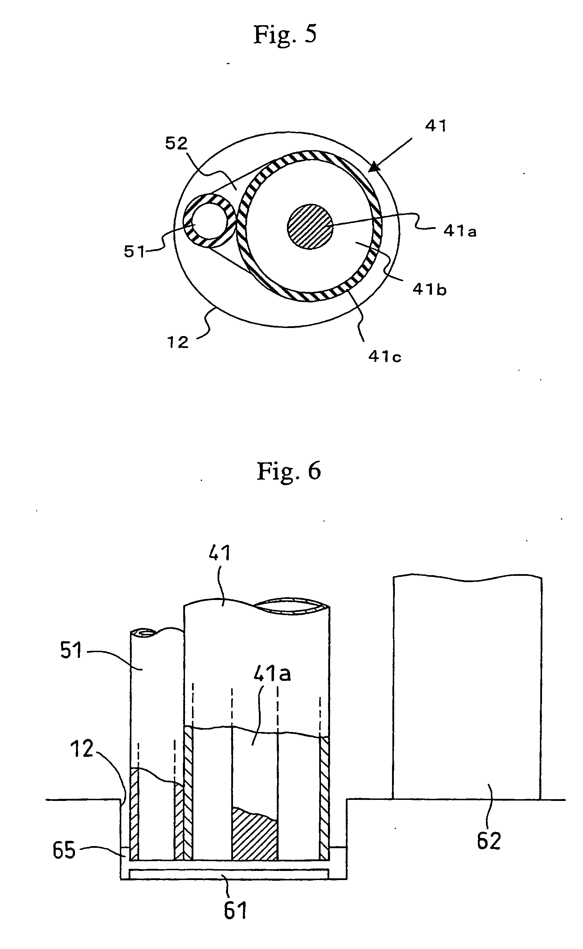

The luminescence detecting unit 32 includes a plurality of photoconducting guides 41 arranged at the same intervals as the multiple minute wells 12 provided in the microarray plate 10. The multiple photoconducting guides 41 are fixed in fixing holes formed at regular intervals in the luminescence detecting unit transporting arm 33. The guides are also fixed in fixing holes formed at regular intervals in a photoconducting guide fixing spacer 42 located below the arm. Thus, the photoconducting guide 41 are integrated with the substrate solution injecting capillary 51. The luminescence detecting unit 32 also includes one or more height-controlling bar members 62 (see Fig. 6) disposed among the photoconducting guides 41 and extending downward from the luminescence detecting unit transporting arm 33. By lowering the luminescence detecting unit transporting arm 33 when the photoconducting guides 41 of the luminescence detecting unit 32 are positioned with respect to the multiple minute wells 12 in the microarray plate 10, the tip of each of the photoconducting guides 41 can be inserted into the minute wells. The lowering of the luminescence detecting unit 32 is stopped when the height-controlling bar member 62 hits the microarray plate 10 so that the tip of the photoconducting guides 41 does not collide with the bottom surface of the minute wells 12. The light received at a light-receiving plane at the end of each photoconducting guide 41 of the luminescence detecting unit 32 is detected individually by a multichannel photomultiplier built inside the photocounting device 40.

Fig. 5 shows a transversal cross-section of the luminescence detecting unit when inserted into the minute well, the luminescence detecting unit accommodating the photoconducting guides and the substrate injection capillary in an integral manner. Fig. 6 shows a sectional side elevation of the luminescence detecting unit.

A photoconducting guide 41 is made up of a core 41a, a clad 41b and a covering 41 c. The core 41 a has a diameter of about 50 µm, and the covering 41 c has an external diameter of about 120 µm. The photoconducting guide 41 is built with a substrate injecting capillary 51 in an integral manner. The substrate injecting capillary 51 is made of a thin glass tube with an external diameter of 30 µm and an internal diameter of 20 µm and is fixed to the surface of the covering on the photoconducting guide 41 with a cement layer 52. To the upper end of each substrate injecting capillary is connected the microsyringe 37 with a silicon rubber tube or the like. By applying a slight, constant pressure upon the plunger in the microsyringe 37 using the plunger push-down mechanism 38, the luminescent reaction substrate solution can be injected into the minute well from the lower end of the injecting capillary 51. The tip of the injecting capillary 51 is aligned with the tip surface of the photoconducting guide 41, so that the luminescent reaction substrate solution can travel on the surface of the guide and permeates the gap with the reacting molecule immobilized region provided on the bottom surface of the minute well 12. Fig. 6 shows how a chemical luminescent reaction substrate solution 65 injected from the substrate solution injecting capillary collects in the minute well 12 of the microarray plate 10.

The height-controlling bar member 62 is used for stopping the tips of the photoconducting guide 41 and substrate solution injecting capillary 51 at a certain height from the bottom of the minute well 12. If the tip surface of the photoconducting guide 41 is in contact with the reacting molecule immobilized region 61 in the minute well 12, that would make it difficult for the chemical luminescent reaction substrate solution 65 to come into contact with marker enzyme or the like due to bubbles or air gaps. Thus, there should desirably be a certain distance between the surface of the reacting molecule immobilized region 61 and the tip surface of the photoconducting guide 41. In the illustrated example, the tip of the height-controlling bar member 62 is located higher than the tip of the photoconducting guide 41, and the bar member is designed such that, when the tips of the individual photoconducting guides 41 are inserted into the minute wells in a row, its tip comes into contact with the microarray plate surface outside the minute well. In this example, when the tip of the height-controlling bar member 62 is in contact with the microarray plate surface, there is a gap of about 20 µm between the tip surface of the photoconducting guide 41 and the bottom surface of the well. As a result, measurements can be carried out at a number of minute reaction regions simultaneously, thus significantly improving processing performance.

The height-controlling guide may be constituted by the photoconducting guide. In that case, the light introduced from a detection light source via a height-controlling photoconducting guide is reflected by the bottom surface of the minute well 12, and the fact that the tip surface of the height-controlling photoconducting guide has come into contact with the microarray plate can be detected upon detection of a large change in the intensity of the reflected light returning via the height-controlling photoconducting guide. The height control may be based on a mechanical measurement of the distance of vertical travel, rather than the detection of reflected light. Further, the height-controlling member may be designed such that it comes into contact with the bottom surface of the minute well 12. In that case, the tip of the height-control member is extended downward beyond the photoconducting guide 41.

Hereafter, an experiment using the microarray plate and luminescence measuring device according to the invention will be described.

After washing the microarray plate 10 shown in Fig. 1, a silanizing agent having a sulfhydryl (SH) group was reacted at the bottom surface of each minute well 12, thus introducing the SH group on the surface. Then, a solution containing a capturing nucleic acid probe with an amino group at the terminal was mixed and reacted with a m-maleimidebenzoyl-N-hydrosuccinimide ester solution. One nanolitter of the mixed solution was then spotted onto each spot region using a microarray preparing apparatus (arrayer), so that the amino group of the probe was reacted with the SH group introduced at the center of the reacting molecule immobilized region 61 provided at the bottom surface of the minute well 12 and immobilized. The capturing nucleic acid probe that has been immobilized was then dried and washed to remove unwanted reagents and coexisting components that were not immobilized, thus obtaining a clean microarray plate.

Forty microliters of a tested sample was then dispensed uniformly over the entire sample introducing region 11 (15 mm in length x 15 mm in width x depth 0.2 mm) including the minute wells 12, in order to react the sample with the immobilized capturing nucleic acid probe in each minute well. As the object of measurement, hepatitis B virus (HBV) genomic DNA was used. As the capturing and marker nucleic acid probes, a variety of synthesized oligonucleotides (base length 50 bp) were used. Hybridization reaction was conducted for about five hours with the microarray plate sealed in an airtight manner and allowed to stand quietly in an incubator heated to a temperature of about 45°C.

The nucleic acid chain of the measurement object was captured and measured by two kinds of probes in a sandwich assay. Using a conventional method, horseradish peroxidase was bound in advance to the marker nucleic acid probe that reacts with a site of the target nucleotide of the measurement object to which the capturing-probe did not bind. After hybridization, a solution of the marker nucleic acid probe that failed to bind was sucked with a micropipette, and then a process of injecting and discharging 40 µl of washing solution was repeated several times. Then, marker probe nucleotides were added, and incubated for five hours. After hybridization, the solution of nucleic acid probe that did not bind to analyte was sucked with a micropipette, and a process of injecting and discharging 40 µl of washing solution was repeated several times using a micropipette.

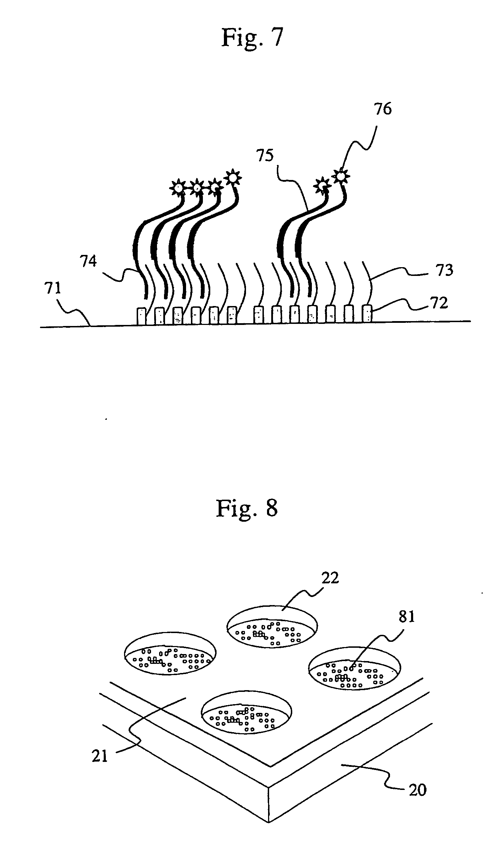

Fig. 7 schematically shows the mutual relationship between the marker probe, the sample nucleic acid chain and the capturing probe.

On a surface 71 of the reacting molecule immobilized region in the minute well 12 is provided a probe immobilized portion 72 with an exposed SH group, where a capturing nucleic acid probe 73 is immobilized. A target nucleotide 74 in the sample hybridizes to the nucleic acid probe 73 in a hybridization reaction. To the site of the target nucleotide which not bound to the capturing probe 73 is bound a marker nucleic acid probe 75 to which a luminescence marker substance 76 is bound.

After the last washing solution was sucked, the microarray plate 10 was placed on the microarray plate fixing base 31 of the luminescence detecting device shown in Fig. 3. The luminescence detecting unit 32 was positioned relative to the minute wells (diameter 150 µm) in the microarray plate 10 and was then lowered by driving the luminescence detecting unit transporting arm 33. In the illustrated example, the luminescence detecting unit 32 includes 16 photoconducting guides 41. When the tip of the height-controlling bar member 62 in the luminescence detecting unit 32 came into contact with the surface of the sample introducing region 11 of microarray plate 10, the movement of the luminescence detecting unit 32 was stopped. In this state, the photoconducting guides 41 and the substrate solution injecting capillary 51 in the luminescence detecting unit 32 were inserted into the minute wells 12, with their tips remaining at a height of 20 µm from the bottom surface of the minute wells 12. Then, about 1 nl of a reaction solution containing enzyme reaction substrate luminol and hydrogen peroxide was added in the gap between the lower surface of each photoconducting guide 41 and the reacting molecule immobilized regions 61 in the minute wells 12, using an injecting capillary 51, in order to initiate a luminescent reaction. The intensity of luminescence in the period between the injection of the reaction solution and 10 seconds later was measured using the photocounting device 40 with a built-in 16-channel photomultiplier (Hamamatsu Photonics K.K.).

As a result, in the spots where the sample solution containing the target nucleotides acid chain with the concentration of 10 pmol/l had been reacted, a relative luminescence intensity was obtained that was 60 times higher than that with a sample that did not contain the target nucleotides. The influence of the luminescence intensity from a sample solution containing a 10 pmol/l target nucleic acid chain that had been reacted in the adjacent regions was 5% or less and could therefore be disregarded. The distribution of the luminescence intensity for the entire microarray plate can be seen by plotting the output of the individual photoconducting guides.

Luminescence was measured under the same reagent reaction conditions as described above, except that the microarray plate shown in Fig. 2 was used. As a result, in the spots where a sample solution containing 10 pM of the target nucleic acid chain was reacted, a relative luminescence intensity was obtained that was about 50 times stronger than that with a sample that did not contain the target analyte nucleotides.

A similar experiment to that described above was successfully conducted using alkaline phosphatase as the marker enzyme, instead of horseradish peroxidase. As the substrate, using Lumigen APS-5 (Lumigen, Inc.), for example, which is a dioxethane compound, realized a long life luminescence measurement and produced the light amount that was about 10 times more than that obtained with the conventional substrate in the same time.

Hereafter, another experiment using the microarray plate and luminescence measuring device according to the invention will be described.

One-tenth quantity of an ethanol solution of 1 % γ-aminopropyltriethoxysilane was added to a 0.01 % (W/W) suspension of silica particles with an average diameter of 4.0 µm. The mixture was then heated at 60°C for three hours to introduce amino groups into the surface. An avidin protein solution was added to the amino-silanized silica particles, to which a small amount of 1% glutaraldehyde was further added and immobilized on the silica particles. A variety of capturing probe nucleic acid chains with biotin-modified terminals were prepared and reacted with the avidin-immobilized silica particle suspension that had been divided, thus preparing capturing-probe nucleic acid chain immobilized silica particles.

As shown in Fig. 8, 1 nl of suspension solution containing different nucleic-acid chain immobilized silica particles 81 was dispensed into the minute wells 22, using the microarray plate 20 shown in Fig. 2. The microarray plate 20 in the present example did not have anything immobilized at the bottom of each minute well 22. After air-drying the silica particle suspension, 40 µl of a sample containing target nucleiotides was injected into the sample introducing region 21 of the microarray plate and dispensed to the individual minute wells 22, thereby binding the target nucleotides to the silica particles for capturing it. After hybridization at 40°C for 12 hours, a thorough washing was performed.

Then, the microarray plate was mounted on the luminescence detecting device shown in Fig. 3, and luminescence marker probe nucleotide to which luminescence enzyme alkaline phosphatase had been bound were added to each minute well, from which luminescence was detected in the previously described manner. As a result, from the sample containing the target nucleotide with a concentration of 1 nM, luminescence intensity was obtained that was about 30 times stronger than that with the sample containing no target nucleotide. In this example, the location of the reacting molecule immobilized region where silica particles are placed may be freely set or modified among the plural minute wells. The quantity of injected silica particles may also be readily varied in order to change the amount captured. Further, the microarray plate can be reused by removing the silica particles by washing.

### INDUSTRIAL APPLICABILITY

In accordance with the invention, for the detection of luminescence in an microarray having a plurality of reacting molecule immobilized regions, partition walls are provided around individual reacting molecule immobilized regions. Thus, the intensity of luminescence from individual minute region can be detected with high sensitivity and accuracy and at low reagent cost.

## Claims

1. A luminescence detecting device for detecting a luminescent reaction substance captured in a plurality of minute wells arranged in a microarray plate at predetermined intervals, said device comprising:
holding means for holding said microarray plate;
a luminescence detecting unit including a plurality of photoconducting guides whose tips can be inserted into said minute wells formed in said microarray plate with the same intervals as those of said minute wells, and substrate solution injecting means assembled together with said photoconducting guides for introducing a luminescent reaction substrate solution into individual minute wells, said luminescence detecting unit being disposed above said holding means and capable of moving up or down relative to said holding means;
drive means for driving said luminescence detecting unit up or down relative to said holding means;
means for stopping the downward movement of said luminescence detecting unit driven by said drive means when the tips of said photoconducting guides are at a predetermined position where said tips are inserted into said minute wells of said microarray plate but do not come into contact with the bottom surface of said minute wells; and
photodetecting means capable of detecting the luminescence from individual minute wells that has been received by said luminescence detecting unit.

2. The luminescence detecting device according to claim 1, wherein the interval between the centers of adjacent photoconducting guides is in the range of between 40 and 2000 µm.

3. The luminescence detecting device according to claim 1 or 2, further comprising control means whereby, after the tips of said photoconducting guides are inserted into the minute wells in said microarray plate and stopped at said predetermined position where they are not in contact with the bottom surface of said minute wells, a luminescence substrate solution is added to said minute wells with said substrate solution injecting means and the intensity of luminescence is measured.

4. A microarray plate for luminescence detection, comprising:
a substrate having a flat surface; and
an opaque sheet having a plurality of through holes arranged at predetermined intervals, said opaque sheet being bonded to the flat surface of said substrate, wherein a reactive substance immobilized region is provided on the substrate surface exposed at the bottom of said through holes in said opaque sheet.

5. The microarray plate for luminescence detection according to claim 4, wherein said opaque sheet has a water-repelling property.

6. The microarray plate for luminescence detection according to claim 4 or 5, wherein said through holes have a diameter in the range of between 10 and 1000 µm.

7. A method of detecting a target biological polymer comprising the steps of:
sedimenting a group of particles onto a plurality of minute wells formed in a microarray plate at predetermined intervals, said particles having a reactive substance for capturing a target biological polymer immobilized thereon;
dispensing a sample solution into said minute wells;
holding said microarray plate in which said sample has been dispensed for a predetermined time at a predetermined temperature;
adding a luminescence marker probe nucleic nucleotide to said target biological polymer into said minute wells; and
adding a luminescent reaction substrate solution into said minute wells and detecting luminescence.
